# EUROPEAN PATENT APPLICATION

(11) **EP 2 219 143 A1**
(43) Date of publication of application: **18.08.2010**
(21) Application number: 09154025.2
(22) Date of filing: 27.02.2009
(51) Int. Cl.: G06Q 10/00, G06F 17/27

(54) **Handheld electronic device and associated method for obtaining new language objects for use by a routine on the device**

(30) Priority: 12.02.2009 US 151903 P
(71) Applicant: RESEARCH IN MOTION LIMITED, Waterloo, Ontario N2L 3W8 (CA)
(72) Inventor: The designation of the inventor has not yet been filed
(74) Representative: Roberts, Gwilym Vaughan

(57) **Abstract**

A method of obtaining data for use on an electronic device that includes a processor and a memory, the memory having stored therein one or more routines executable by the processor. The method including receiving an e-mail address in a recipient address field of an e-mail message, identifying one or more language objects from the e-mail address, and employing one of the number of language objects in the one or more routines.

## Description

### CROSS-REFERENCE TO RELATED APPLICATION

The instant application claims priority from U.S. Provisional Patent Application Serial No. 61/151,903 filed February 12, 2009, the disclosure of which is incorporated herein by reference.

### BACKGROUND

### Field

The disclosed and claimed concepts relate generally to electronic devices and, more particularly, to an electronic device and method for obtaining new language objects for use by one or more routines on the device.

### Description of the Related Art

Numerous types of electronic devices that utilize electronic mail (e-mail) applications are known. Such devices commonly range in size from large desk top units to small portable handheld devices and typically include some type of keyboard-like input device scaled relative to the associated electronic device. Examples of such handheld electronic devices include, for instance, personal data assistants (PDAs), handheld computers, two-way pagers, cellular telephones, and the like. In order to aid a user in the input of correctly spelled words on an electronic device, numerous spell check applications that utilize electronic dictionaries have been provided.

Many handheld electronic devices also feature wireless communication capability, although many such handheld electronic devices are stand-alone devices that are functional without communication with other devices. Such handheld electronic devices are generally intended to be portable, and thus are of a relatively compact configuration in which keys and other input structures often perform multiple functions under certain circumstances or may otherwise have multiple aspects or features assigned thereto.

With advances in technology, handheld electronic devices are built to have progressively smaller form factors yet have progressively greater numbers of applications and features resident thereon. As a practical matter, the keys of a keypad can only be reduced to a certain small size before the keys become relatively unusable. In order to enable text entry, however, a keypad typically provides keys for entering all alphabetic letters, for instance, twenty-six letters of the Roman alphabet, as well as appropriate punctuation, digits, and other symbols.

One way of providing numerous letters in a handheld electronic device having a small form factor is to provide a "reduced keyboard" in which multiple letters, symbols, and/or digits, and the like, are assigned to any given key. As used herein, the wording "and/or" is intended to refer to an inclusive-or. That is, "X and/or Y" is intended to refer to X or Y or both. Moreover, "X, Y and/or Z" is intended to refer to X, Y, or Z, or any combination thereof.

For example, touch-tone telephones typically include a reduced keyboard having twelve keys, of which ten keys have digits thereon, and of these ten keys, eight have Roman letters assigned thereto. For instance, one of the keys includes the digit "2" as well as the letters "A", "B", and "C". Since a single actuation of such a key potentially could be intended by the user to refer to any of the letters "A", "B", and "C", and potentially could also be intended to refer to the digit "2", the input (by actuation of the key) generally is an ambiguous input and is in need of some type of disambiguation in order to be useful for text entry purposes. Other known reduced keyboards have included other arrangements of keys, letters, symbols, digits, and the like.

In order to enable a user to make use of the multiple letters, digits, and the like on any given key in an ambiguous keyboard, numerous keystroke interpretation systems have been provided. For instance, a "multi-tap system" allows a user to substantially unambiguously specify a particular linguistic element, for example, on a key by pressing the same key a number of times equal to the position of the desired linguistic element on the key. Another keystroke interpretation system includes key chording in which keys are pressed in various combinations to achieve particular results. Still another keystroke interpretation system might include a software-based text disambiguation system which seeks to interpret the keystrokes in view of stored dictionary data, linguistic rules, stored algorithms, and/or the like.

Many electronic devices also provide spell check systems that may also utilize such stored dictionary data, linguistic rules, stored algorithms, and/or the like to detect spelling errors in text received on the device.

While such software-based systems have been generally effective for their intended purposes, there still exists room for improvement.

### BRIEF DESCRIPTION OF THE DRAWINGS

A full understanding of the disclosed and claimed concepts can be gained from the following Description when read in conjunction with the accompanying drawings in which:

Fig. 1 is a front elevational view of an example electronic device in accordance with an embodiment of the disclosed and claimed concepts;

Fig. 2 is a schematic depiction of the example handheld electronic device of Fig. 1;

Fig. 3 is a schematic view of a portion of a processor apparatus of the handheld electronic device of Fig. 2;

Fig. 4 is an example draft e-mail in accordance with an embodiment of the disclosed and claimed concepts;

Fig. 5 is an exemplary flowchart depicting at least a portion of a method in accordance with an embodiment of the present disclosure; and

Fig. 6 shows a listing of example e-mail addresses of various forms from which language objects may be found in accordance with the disclosed and claimed concepts.

Similar reference numerals refer to similar parts throughout the specification.

### DESCRIPTION

While existing software-based text disambiguation systems have been generally effective for their intended purposes, such disambiguation systems are not without limitation. In certain applications, the function of a software-based text disambiguation system can be cumbersome if a user must expend substantial effort in entering text. One such situation in which this may occur is in the context of a word or other language object that may not already be in the stored dictionary, a situation commonly encountered when a user desires to enter proper names, such as that of persons, businesses, places, organizations, or the like. Another exemplary situation in which this may occur is when a word or other language object is already stored in the dictionary but is considered to have a relatively low frequency. As a result of the relatively low frequency, entering the word or other language object may require significant input effort by the user.

One particular situation in which this is likely to occur is when a user of an electronic device has entered one or more recipient addresses (e-mail addresses) in a recipient field of an electronic message (e-mail message) that include such a word or other language as a portion of the e-mail address, and thereafter the user wants to use that word or other language object while, for example, composing an e-mail message. For instance, if a user in preparing an e-mail message to Joohn Smiith at Exxample Corp. has entered the e-mail address "joohnsrniith@exxample.com" in a recipient address field of an e-mail message and then wants to input text, such as in the salutation or body portion of the message, it is likely that the words "Joohn," "Smiith," and "Exxample" will not be included in the stored dictionary or, if stored, have a relatively low frequency. As a result, the user must expend substantial effort in inputting those words.

Additionally, if a user inputs words (using either conventional or reduced keypads or similar means), but in doing so incorrectly spells them, a normal spell check system will most likely not recognize the error, or conversely may indicate a misspelling when one is not truly present, which can present further burden to a user. Such typographical errors or misspellings may have adverse consequences in e-mails, such as, without limitation, lost opportunities with a prospective employer or client due to the bad impression left, particularly by misspelling the recipient's name.

It is to be appreciated that typographical errors and misspellings may occur on a variety of electronic devices (e.g., without limitation, personal computers, laptops, PDA's, etc.), and may occur even more frequently on devices with smaller keyboards or reduced keyboards. Although the following description is directed to an embodiment of the disclosed and claimed concepts as employed in conjunction with a handheld electronic device, it is to be readily appreciated that the concepts disclosed and claimed herein may readily be applied to other electronic devices (e.g., without limitation, personal computers, laptops, etc.).

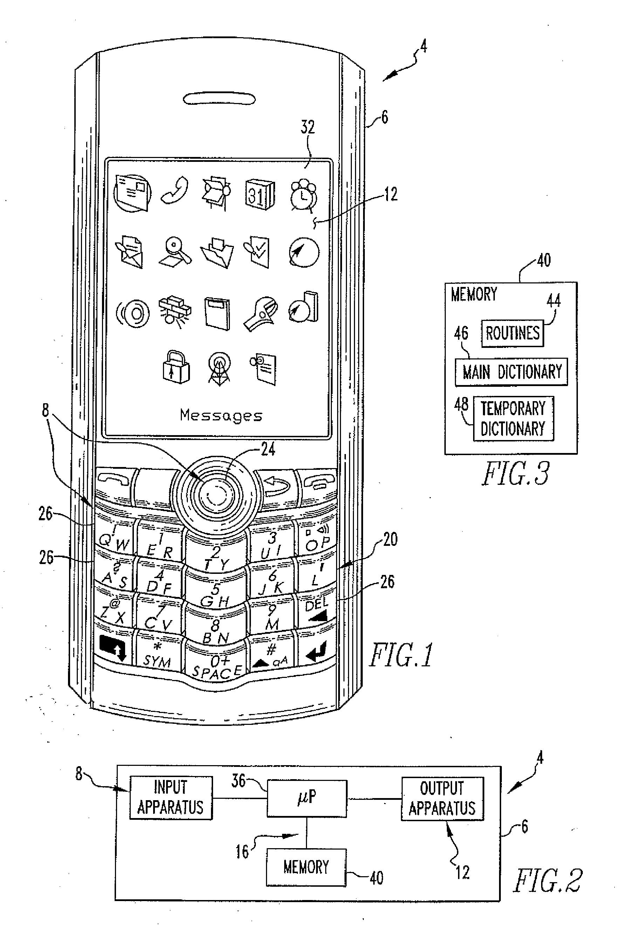

An improved handheld electronic device 4 in accordance with an embodiment of the disclosed and claimed concepts is indicated generally in Figure 1 and is depicted schematically in Figure 2. The improved handheld electronic device 4 comprises a housing 6, and further comprises an input apparatus 8, an output apparatus 12, and a processor apparatus 16 disposed in the housing 6. The input apparatus 8 provides input to the processor apparatus 16. The processor apparatus 16 provides output signals to the output apparatus 12. As described elsewhere herein, the present exemplary embodiment of the handheld electronic device 4 includes applications and/or routines resident thereon such as, for example, and without limitation, a software-based text disambiguation system, a software-based spell check system, and an e-mail and/or other messaging client, although other and/or additional applications and/or routines can be provided without departing from the disclosed and claimed concepts. As used herein, an internet e-mail address (hereinafter "e-mail address") generally refers to a string of characters in the form localpart@exampledomain.com, which is known as a Fully Qualified Domain Address (FQDA). The part before the @ character (i.e., the ampersand) is the local part of the address, often the username of the recipient, and the part after the @ character is a domain name.

The input apparatus 8 comprises a keypad 20. The input apparatus may further comprise a trackball 24. The keypad 20 in the exemplary embodiment depicted herein comprises a plurality of keys 26 that are each actuatable to provide input to the processor apparatus 16. The trackball 24 is rotatable to provide navigational and other input to the processor apparatus 16, and additionally is translatable in a direction inwardly toward the handheld electronic device 4 to provide other inputs, such as selection inputs. The trackball 24 is freely rotatable on the housing 6 and thus is able to provide navigational inputs in the vertical direction, i.e., the up-down direction, in the horizontal direction, i.e., the left-right (side to side) direction, as well as combinations thereof. In addition, the trackball 24 may be adapted to provide navigational inputs in diagonal directions. The keys 26 and the trackball 24 serve as input members which are actuatable to provide input to the processor apparatus 16. Alternative mechanisms for providing similar multidirectional navigation may be used in place of the trackball 24, such as, without limitation, a joystick, a touchpad, a touch-sensitive display, and hard buttons disposed on the housing 6 of the handheld electronic device 4. The exemplary output apparatus 12 comprises a display 32.

Many of the keys 26 each have a plurality of letters, i.e., linguistic elements, assigned thereto. For instance, one of the keys 26 has assigned thereto the letters "A" and "S". Another of the keys 26 has assigned thereto the letters "Q" and "W". The letters of the exemplary keypad 20 are in an arrangement of a reduced QWERTY keyboard. In the present example embodiment, the exemplary letters are Roman letters, and the exemplary Roman letters serve as linguistic elements for text input into the handheld electronic device 4. It is understood that while the linguistic elements of the instant example embodiment are depicted as being characters, specifically Roman letters, the linguistic elements could be other elements such as, for example and without limitation, other types of characters, ideograms, portions of ideograms such as strokes, and other elements that can be used in the generation of words in a language. It is noted that the expressions "text" and "word", and variations thereof, are to be broadly construed herein and are not intended to be limiting in any fashion with regard to a particular language, a particular portion of a language or a means of providing an expression in a language, or to a particular language type or format. Moreover, the expressions "text" or "word" are not limited to words in a vocabulary and also include names, nomenclatures, abbreviations, etc.

Referring to Figure 2, the processor apparatus 16 comprises a processor 36 and a memory 40. The processor 36 may be, for example and without limitation, a microprocessor (µP) that interfaces with the memory 40. The memory 40 can be any one or more of a variety of types of internal and/or external storage media such as, without limitation, RAM, ROM, EPROM(s), EEPROM(s), FLASH, and the like that provide a storage register, i.e., a machine readable medium, for data storage in a similar fashion to an internal memory storage of a computer, and can be volatile memory or nonvolatile memory. The memory 40 has stored therein a number of routines 44 (shown in Figure 3) that are executable on the processor 36. As employed herein, the expression "a number of" and variations thereof shall refer broadly to any nonzero quantity, including a quantity of one. One or more of the routines 44 implement a software-based text disambiguation system that is operable to disambiguate ambiguous text input, such as when one or more of the keys 26 having a plurality of letters assigned thereto is actuated, and provide to the display 32 a number of possible intended inputs that may be selected. Another one or more of the routines 44 may implement a software based spell check system that may provide a user with an indication or suggestion(s) when a misspelled word is entered. Other routines 44 can include a text editing system having an e-mail text editor for composing e-mail or other text messages from inputted text. It is to be appreciated that although the example embodiment described herein utilizes a reduced keypad, various embodiments of the disclosed and claimed concepts may be readily applied to electronic devices, both handheld as well as non-handheld, that employ full conventional keypads or keyboards. Such electronic devices, while generally employing disambiguation systems as described herein, may employ spell check systems such as described, or similar to as described, herein.

As seen in Figure 3, the memory 40 includes a main dictionary 46 that has a plurality of language objects and frequency objects stored therein. The language objects are representative of words or word fragments. The language objects and the frequency objects are associated. A given frequency object is a frequency value indicative of the relative frequency within the relevant language of the given word or word fragment represented by the language object. The memory 40 includes other objects stored and organized therein, as will be described in greater detail below.

When executed by the processor 36, the software-based text disambiguation system interfaces with the memory 40 and the objects stored therein to provide output in response to input via the input apparatus 8. In accordance with the various embodiments of the disclosed and claimed concepts, and as described in detail elsewhere herein, certain wordings or other language objects may be stored in a temporary dictionary 48 (which may comprise a number of storage registers) in the memory 40 and be used by the software-based text disambiguation system to disambiguate ambiguous inputs received by the device. The wording or other language objects in such a temporary dictionary 48 may be accorded a relatively high frequency value in order that such words or other language objects, if appropriate, will be presented in whole or in part on the display 32 at an early opportunity during the text entry process to limit the editing effort and other input that might otherwise be required to enter such words or other language objects. A temporary dictionary 48 in the memory 40 may also be used by the software-based spell check system to check spelling of language objects entered by a user.

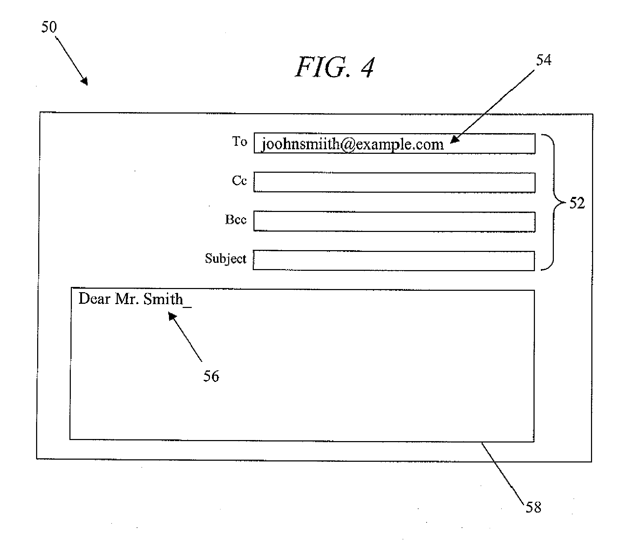

In a situation where, for example, a draft e-mail message 50, such as shown in Fig. 4, is being prepared by either receiving entry of one or more recipient e-mail addresses in the corresponding fields 52 (e.g., without limitation, the "To:" field, "CC" field, "BCC" field) or by population of such fields in a reply to, or forward of, an existing message or other similar means, words or other language objects may be received that are either not stored in the main dictionary 46 or, if stored, have a relatively low frequency associated therewith. The user may thereafter want to use those words or other language objects in, for example, composing an e-mail message using the e-mail text editor of the handheld electronic device 4. In accordance with an aspect of the disclosed and claimed concepts, and as described in more detail below, certain words or other language objects are advantageously stored in the temporary dictionary 48 in the memory 40 for ready use by the software-based text disambiguation system when inputting text and/or for use by the software-based spell check system.

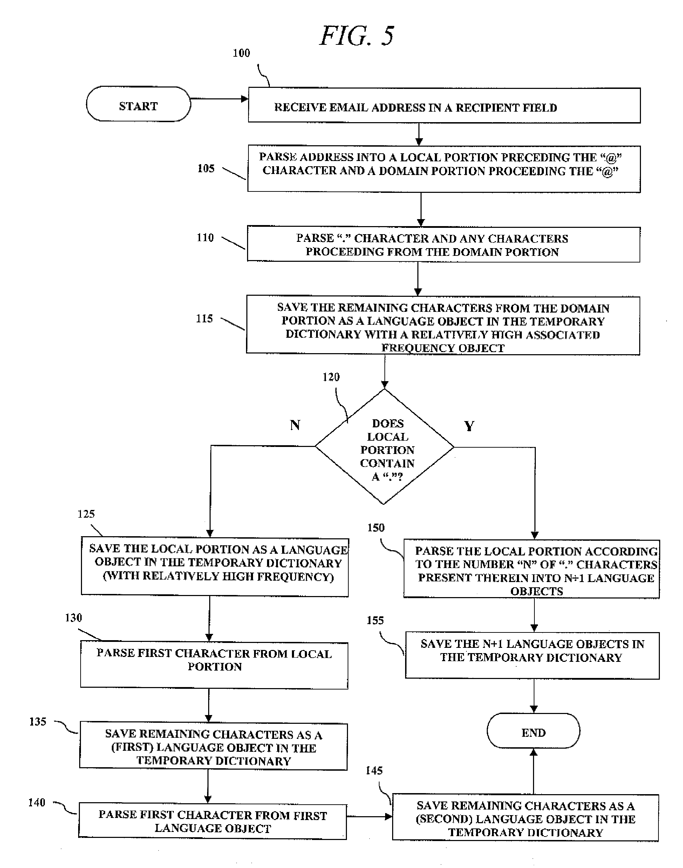

Figure 5 is a flowchart illustrating a method of adding language objects to the temporary dictionary 48 of the memory 40 of the handheld electronic device 4 according to one example embodiment of the disclosed and claimed concepts. In the example method described in relation with Fig. 5, the method causes language objects to be added to the temporary dictionary 48 based upon population of one or more recipient address fields 52 of an e-mail message 50 with a number of e-mail addresses, with the result being that certain language objects, such as words or character combinations included within the number of e-mail addresses themselves, are added to the temporary dictionary 48. Thereafter, for at least some predetermined period as described below, those words will be used by at least one of the software-based text disambiguation system or the software-based spell check system included as part of the routines 44 of the handheld electronic device 4 when it disambiguates and/or spell checks text inputted by a user.

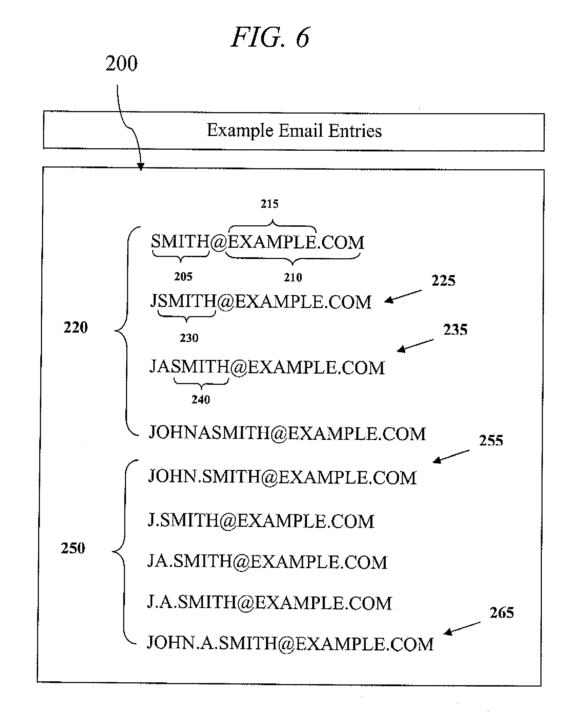

Referring to Figure 5, the method begins at step 100, wherein an e-mail address is received by the electronic device 4 in a recipient address field of an e-mail message (i.e., input by a user using one or more of the input apparatus 8 in conjunction with the e-mail client), such as the example e-mail address 54 shown in Fig. 4. Fig. 6 shows a number of example e-mail addresses 200. It is noted that such e-mail addresses as shown in Fig. 6 are meant for exemplary purposes only and not to limit the disclosed and claimed concepts.

It is to be appreciated that the e-mail address received in one of the recipient address fields 52, such as e-mail address 54 of Fig. 4, may be entered by a user (and therefore received by the electronic device 4) through various methods including, without limitation, inputting a number of individual characters through actuating a number of keys 26 of the keypad 20, searching and manually selecting an e-mail address from an address book, selecting an e-mail address from a web page, replying to an e-mail message previously received on the electronic device 4, or retrieving an e-mail address from an address book by inputting a number of characters corresponding to an e-mail address in an address book in one of the number of recipient fields of the e-mail message.

Continuing to refer to Fig. 5, once the e-mail address has been received by the electronic device in step 100, the method proceeds to step 105, where the received e-mail address is parsed into multiple portions. More specifically, in step 105, the e-mail address is parsed into two portions, a local portion 205 and a domain portion 210 (see Fig. 5). The local portion 205 of the e-mail address is comprised of the characters preceding the "@" character while the domain portion 210 is comprised of the characters proceeding the "@" character.

After the domain portion 210 has been parsed from the e-mail address at step 105, the first "." character proceeding the "@" character, along with any characters proceeding the first "." character (e.g., without limitation, ".com"; ".net"; ".gov"; ".engr.edu") are parsed from the domain portion 210, as shown in step 110. Therefore, in cases where multiple "." characters are detected in the domain portion 210 such as, for example an e-mail address "student@college.engr.edu", where the domain portion is "college.engr.edu", the result of step 105 would yield "college" as the ".engr.edu" characters would be parsed from the domain portion 210. The remaining characters 215 (see Fig. 5) are then saved as a language object in the temporary dictionary 48 (the data may be stored in a cache memory or some other suitable temporary memory register) as shown at step 115. In addition, each language object that is saved in the temporary dictionary 48 has associated with it a relatively high frequency object (i.e., a frequency object value that would indicate a relatively high frequency within the relevant language of the language object in question). A relatively high frequency value is assigned to the language object while in the temporary dictionary because it is likely that the language object may be employed by one or more routines on the device in the short term when receiving input text from a user of the electronic device 4.

Next, the method proceeds to step 120, wherein a determination is made as to whether the local portion 205 contains at least one "." character therein. If the answer at step 120 is no, as would be the case in the example e-mail addresses 220 of Fig. 6, then at step 125, the local portion 205 is then saved as a language object in the temporary dictionary 48, similar to the domain portion as previously discussed.

After the local portion 205 is saved as a language object in the temporary dictionary 48 as shown in step 125, the method proceeds to step 130 where the first character is parsed from the local portion. After the first character is parsed from the first portion, the remaining characters 230 (as shown in Fig. 6) are then saved as a language object in the temporary dictionary 48, as shown in step 135. For example purposes, the remaining characters will hereinafter be referred to as the first language object. In the case of an e-mail address such as the example e-mail address 225 of Fig. 5, "JSMITH@EXAMPLE.COM", the combination of steps 130 and 135 would result in the first language object "SMITH" being added in the temporary dictionary.

Similar to steps 130 and 135, in steps 140 and 145, the first character of the first language object is parsed from the remaining characters to produce a second language object (see characters 240 of Fig. 6). In the case of an e-mail address such as the example e-mail address 235 of Fig. 6, "JASMITH@EXAMPLE.COM", the combination of steps 130, 135, 135, and 140 would result in the first language object "ASMITH" and the second language object "SMITH" being added in the temporary dictionary. It is to be appreciated that additional language objects may be obtained through additional repetitions of steps 140 and 145 until there are no characters remaining from the local portion from which to parse the first character. Additionally, it is to be appreciated that additional language objects may readily be obtained through the repetition of steps similar to that of steps 130 and 135, and steps 140 and 145, in which the last character is parsed from the local portion during each subsequent step. It is also to be appreciated, that although not shown in the example of Fig. 5, similar steps as performed on the local portion may also be performed on the domain portion to yield additional language objects.

Returning to step 120, if it is determined that the local portion does therein contain at least one "." character (i.e., at least one period), as would be the case in the example e-mail addresses 250 of Fig. 6, the method then proceeds to step 150.

In step 150, the local portion is parsed into multiple language objects (wherein multiple = N + 1) as delimited by the number of "." character(s) N contained therein. In other words, if the number of "." character(s) N contained within the local portion is one (N = 1), then two (N + 1 = 2, when N = 1) language objects would result from step 150. For example, in the case of an e-mail address such as the example e-mail address 255 of Fig. 6, "JOHN.SMITH@EXAMPLE.COM", two (N + 1, N=1) language objects would result, "JOHN" and "SMITH", from step 150.

Similarly, if the number of "." characters N contained within the local portion is two (N = 2), then three (N + 1 = 3, when N = 2) language objects would result from step 150. For example, in the case of an e-mail address such as the example e-mail address 265 of Fig. 6, "JOHN.A.SMITH@EXAMPLE.COM", three (N + 1 = 3, when N = 2) language objects would result, "JOHN"; "A"; and "SMITH", from step 150.

Following the parsing of the local portion 205 described in step 150, each of the resulting number of language objects is then saved as a language object in the temporary dictionary 48, as described in step 155.

It is to be appreciated, that although not described further herein, that additional language objects may be obtained from the domain portion 210 in instances
where the domain portion contains multiple "." characters by parsing the domain portion 210 as described in steps 150 and 155 in regard to the local portion 205. Additionally, it is to be appreciated that additional language objects may also be obtained from the domain portion 210 through further parsing of the domain portion as described herein in regard to the local portion 205.

Thus, the method described in connection with Figures 5 and 6 will result in language objects, such as words or other character combinations, derived from an e-mail address received in a recipient address field of an e-mail on the electronic device 4, being added to the temporary dictionary 48, for subsequent use by one or more of a software-based text disambiguation system and a software-based spell check system, such as in the example shown in Fig. 4 as discussed further below.

Fig. 4 shows an example of an e-mail message 50 being prepared according to an embodiment of the disclosed and claimed concepts. The example e-mail message 50 is to be sent to a recipient having the rather uncommon name of "Joohn Smiith" (correctly spelled with "oo" and "ii") having the e-mail address of joohnsmiith@example.com. the correct e-mail address 54 "joohnsmiith@example.com" has been received in the "To" address field of recipient address fields 52. Subsequently, the text 56 "Dear Mr. Smith" has been received in the body portion 58 of the e-mail message 50 as a user of the electronic device 4 desires to send a message to "Mr. Smiith." In many cases, an e-mail address received in one of the recipient address fields 52 is more likely to be correctly spelled than text received in a body portion 58 of an e-mail message 50. For example, a user might click on an e-mail address to initiate the drafting of an e-mail. Also, the e-mail address would defmitely be spelled correctly when replying to an e-mail. Moreover, if it is the e-mail address that is misspelled, chances are the misspelled e-mail address would be invalid, and thus undeliverable. In such instance, a desired recipient would not receive the message containing misspelled content.

In continued reference to Fig. 4, the language object "Smiith" is a proper name and thus most likely would not be present in a pre-existing dictionary on the electronic device 4. However, utilizing the method described in Fig. 5, the proper name "Smiith" (having the rather unique "ii") would be stored as a language object in a temporary dictionary on the electronic device 4, and thus would be available to one or more of the disambiguation and spell check systems. Accordingly, the language object "Smiith" would be available to one or both of the disambiguation or spell check systems to assist a user of the electronic device 4 in successfully entering the correctly spelled name "Smiith." Such assistance may be provided through various means such as, without limitation, auto correction of spelling, use of an indicator alerting the user of a possible misspelling (with or without an inclusion of a suggested correct spelling), a pop-up listing allowing a user to choose the desired input word or correct spelling, or through other means by which a language object stored in the memory 40 of the electronic device 4 may be employed.

While specific embodiments of the disclosed and claimed concepts have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concepts which is to be given the full breadth of the claims appended and any and all equivalents thereof.

## Claims

1. A method of obtaining data for use on an electronic device that includes a processor and a memory, the memory having stored therein one or more routines executable by the processor, the method comprising:
receiving an entry in a recipient address field of an e-mail message, the entry comprising an e-mail address;
identifying one or more language objects from the e-mail address; and
employing one of the language objects in the one or more routines.

2. The method of claim 1,
wherein the e-mail address comprises a string of characters having an ampersand character therein;
wherein the one or more characters preceding the ampersand character comprise a local portion; and
wherein identifying one or more language objects comprises parsing the local portion into one or more language objects of equal or lesser length than the local portion.

3. The method of claim 2, wherein the one or more language objects are stored in a temporary storage dictionary in the memory.

4. The method of claim 2, wherein said parsing the local portion into one or more language objects comprises:
detecting a period character within the local portion; and
responsive to said detecting, parsing the local portion into a first language object comprising one or more characters preceding the period character and a second language object comprising one or more characters following the period character.

5. The method of claim 2, wherein said parsing the local portion into one or more language objects comprises:
parsing the local portion into a first segment comprising a first character of the local portion and a second segment comprising any remaining characters of the local portion,
wherein one of the one or more language objects comprises the second segment.

6. The method of claim 2, wherein said parsing the local portion into one or more language obj ects comprises:
parsing the local portion into a first segment comprising a first character and a second character of the local portion and a second segment comprising any remaining characters of the local portion,
wherein one of the one or more language objects comprises the second segment.

7. The method of claim 1,
wherein the one or more routines comprise a spell check routine; and
wherein employing one of the language objects in the one or more routines comprises receiving a sequence of characters in a body of the e-mail message and in response thereto employing the spell check routine to provide an indication of presence of a discrepancy between the sequence of characters and said one of the language objects.

8. The method of claim 1, wherein receiving an entry in the recipient address field comprises receiving one or more individual characters entered through an input device.

9. The method of claim 1, wherein the e-mail address is selected from an address book.

10. The method of claim 1, wherein the e-mail address is selected from a web page.

11. The method of claim 1,
wherein the e-mail message is a reply message; and
wherein the e-mail address is automatically populated in the reply message.

12. The method of claim 1,
wherein the electronic device further comprises an address book; and
wherein receiving an entry in the recipient address field comprises:
receiving one or more characters;
detecting that the one or more characters corresponds to an existing e-mail address in the address book; and
replacing the one or more characters with the existing e-mail address.

13. The method of claim 1, wherein the recipient address field comprises at least one of: a "To:" field, a "cc:" field, or a "bcc:" field.

14. The method of claim 1,
wherein the e-mail address comprises a string of characters having an ampersand symbol therein;
wherein the characters following the ampersand symbol comprise a domain portion; and
wherein identifying one or more language objects comprises identifying the domain portion as one of the one or more language objects.

15. The method of claim 1,
wherein the one or more routines comprise a disambiguation routine; and
wherein employing one of the one or more language objects in the one or more routines comprises receiving an ambiguous input during generation of the e-mail message and in response thereto employing the one of the one or more language objects in the disambiguation routine to provide a suggested disambiguated result for the ambiguous input.

16. The method of claim 1,
wherein the e-mail address comprises a string of characters having an ampersand character therein;
wherein the characters following the ampersand character comprise a domain portion; and
wherein identifying one or more language objects comprises parsing the domain portion into one or more language objects of equal or lesser length than the domain portion.

17. An electronic device comprising: an input device, an output device, a processor apparatus, and a memory associated with the processor apparatus, the memory having an e-mail application and one or more other routines executable by the processor apparatus, the e-mail application adapted to send an e-mail message having a recipient address field, the one or more other routines adapted to:
receive an entry in the recipient address field, the entry comprising an e-mail address;
identify one or more language objects from the e-mail address; and
employ one of the language objects in the one or more routines.

18. The electronic device of claim 17,
wherein the e-mail address comprises a string of characters having an ampersand character therein;
wherein the characters preceding the ampersand character comprise a local portion; and
wherein said one or more other routines are adapted to identify one or more language objects by parsing the local portion into one or more language objects of equal or lesser length than the local portion.

19. The electronic device method of claim 18, wherein the one or more language objects are stored in a temporary storage dictionary.

20. The electronic device of claim 18, wherein said parsing the local portion into one or more language objects comprises:
detecting a period character within the local portion; and
responsive to said detecting, parsing the local portion into a first language object comprising one or more characters preceding the period character and a second language obj ect comprising one or more characters following the period character.

21. The electronic device of claim 18, wherein said parsing the local portion into one or more language objects comprises:
parsing the local portion into a first segment comprising a first character of the local portion and a second segment comprising any remaining characters of the local portion,
wherein one of the one or more language objects comprises the second segment.

22. The electronic device of claim 18, wherein said parsing the local portion into one or more language objects comprises:
parsing the local portion into a first segment comprising a first character and a second character of the local portion and a second segment comprising any remaining characters of the local portion,
wherein one of the one or more language objects comprises the second segment.

23. The electronic device of claim 17,
wherein the one or more other routines comprise a spell check routine; and
wherein the one or more other routines are adapted to employ one of the language objects by receiving a sequence of characters in a body of the e-mail message and in response thereto employing the spell check routine to provide an indication of presence of a discrepancy between the sequence of characters and said one of the language objects.

24. The electronic device of claim 17, wherein the one or more other routines are adapted to receive an entry in the recipient address field by receiving one or more individual characters entered through an input device.

25. The electronic device of claim 17, wherein the one or more other routines are adapted to receive an entry in the recipient address field by receiving the e-mail address from an address book.

26. The electronic device of claim 17, wherein the one or more other routines are adapted to receive an entry in the recipient address field by receiving the e-mail address from a web page.

27. The electronic device of claim 17, wherein the one or more other routines are adapted to receive an entry in the recipient address field by receiving the e-mail address from a previously received e-mail message that is being replied to.

28. The electronic device of claim 17,
wherein the memory comprises an address book; and
wherein the one or more other routines are adapted to receive an entry in the recipient address field by:
receiving one or more characters;
detecting that the one or more characters correspond to an existing e-mail address in the address book; and
replacing the one or more characters with the existing e-mail address.

29. The electronic device of claim 17, wherein the recipient address field comprises at least one of a "To:" field, a "cc:" field, or a "bcc:" field.

30. The electronic device of claim 17,
wherein the e-mail address comprises a string of characters having an ampersand symbol therein;
wherein the characters following the ampersand symbol comprise a domain portion; and
wherein the one or more other routines are adapted to identify one or more language objects by identifying the domain portion as one of the one or more language obj ects.

31. The electronic device of claim 17,
wherein the one or more other routines comprise a disambiguation routine; and
wherein the one or more other routines are adapted to employ one of the one or more language objects in the one or more routines by receiving an ambiguous input during generation of the e-mail message and in response thereto employing the one of the one or more language objects in the disambiguation routine to provide a suggested disambiguated result for the ambiguous input.

32. The electronic device of claim 17,
wherein the e-mail address comprises a string of characters having an ampersand character therein;
wherein the characters following the ampersand character comprise a domain portion; and
wherein the one or more other routines are adapted to identify one or more language objects by parsing the domain portion into one or more language objects of equal or lesser length than the domain portion.

## Amended claims

### Amended claims in accordance with Rule 137(2) EPC.

**1.** A method of obtaining data for use on an electronic device that includes a processor and a memory, the memory having stored therein one or more routines executable by the processor, the method comprising:
receiving an entry in a recipient address field of an e-mail message, the entry comprising an e-mail address, the e-mail address comprising a local portion, the local portion comprising characters preceding an ampersand character within the e-mail address;
parsing the local portion of the e-mail address to identify one or more language objects within the local portion of the e-mail address; and
employing one of the language objects in the one or more routines.

**2.** The method of claim 1,
wherein parsing the local portion of the e-mail address to identify one or more language objects within the local portion of the e-mail address comprises parsing the local portion into one or more language objects of equal or lesser length than the local portion.

**3.** The method of claim 2, wherein the one or more language objects are stored in a temporary storage dictionary in the memory.

**4.** The method of claim 2, wherein said parsing the local portion into one or more language objects comprises:
detecting a period character within the local portion; and
responsive to said detecting, parsing the local portion into a first language object comprising one or more characters preceding the period character and a second language object comprising one or more characters following the period character.

**5.** The method of claim 2, wherein said parsing the local portion into one or more language objects comprises:
parsing the local portion into a first segment comprising a first character of the local portion and a second segment comprising any remaining characters of the local portion,
wherein one of the one or more language objects comprises the second segment.

**6.** The method of claim 2, wherein said parsing the local portion into one or more language objects comprises:
parsing the local portion into a first segment comprising a first character and a second character of the local portion and a second segment comprising any remaining characters of the local portion,
wherein one of the one or more language objects comprises the second segment.

**7.** The method of claim 1,
wherein the one or more routines comprise a spell check routine; and
wherein employing one of the language objects in the one or more routines comprises receiving a sequence of characters in a body of the e-mail message and in response thereto employing the spell check routine to provide an indication of presence of a discrepancy between the sequence of characters and said one of the language objects.

**8.** The method of claim 1, wherein receiving an entry in the recipient address field comprises receiving one or more individual characters entered through an input device.

**9.** The method of claim 1, wherein the e-mail address is selected from an address book.

**10.** The method of claim 1, wherein the e-mail address is selected from a web page.

**11.** The method of claim 1,
wherein the e-mail message is a reply message; and
wherein the e-mail address is automatically populated in the reply message.

**12.** The method of claim 1,
wherein the electronic device further comprises an address book; and
wherein receiving an entry in the recipient address field comprises:
receiving one or more characters;
detecting that the one or more characters corresponds to an existing e-mail address in the address book; and
replacing the one or more characters with the existing e-mail address.

**13.** The method of claim 1, wherein the recipient address field comprises at least one of: a "To:" field, a "cc:" field, or a "bcc:" field.

**14.** The method of claim 1,
wherein the e-mail address further comprises characters following the ampersand symbol, the characters following the ampersand symbol comprising a domain portion; and
wherein identifying one or more language objects comprises identifying the domain portion as one of the one or more language objects.

**15.** The method of claim 1,
wherein the one or more routines comprise a disambiguation routine; and
wherein employing one of the one or more language objects in the one or more routines comprises receiving an ambiguous input during generation of the e-mail message and in response thereto employing the one of the one or more language objects in the disambiguation routine to provide a suggested disambiguated result for the ambiguous input.

**16.** The method of claim 1,
wherein the e-mail address further comprises characters following the ampersand character, the characters following the ampersand character comprising a domain portion; and
wherein identifying one or more language objects comprises parsing the domain portion into one or more language objects of equal or lesser length than the domain portion.

**17.** An electronic device comprising: an input device, an output device, a processor apparatus, and a memory associated with the processor apparatus, the memory having an e-mail application and one or more other routines executable by the processor apparatus, the e-mail application adapted to send an e-mail message having a recipient address field, the one or more other routines adapted to:
receive an entry in the recipient address field, the entry comprising an e-mail address, the e-mail address comprising a local portion, the local portion comprising characters preceding an ampersand character within the e-mail address;
parse the local portion of the e-mail address to identify one or more language objects within local portion of the e-mail address; and
employ one of the language objects in the one or more routines.

**18.** The electronic device of claim 17,
wherein said one or more other routines are adapted to parse the local portion of the e-mail address to identify one or more language objects within the local portion of the e-mail address by parsing the local portion into one or more language objects of equal or lesser length than the local portion.

**19.** The electronic device method of claim 18, wherein the one or more language objects are stored in a temporary storage dictionary.

**20.** The electronic device of claim 18, wherein said parsing the local portion into one or more language objects comprises:
detecting a period character within the local portion; and
responsive to said detecting, parsing the local portion into a first language object comprising one or more characters preceding the period character and a second language object comprising one or more characters following the period character.

**21.** The electronic device of claim 18, wherein said parsing the local portion into one or more language objects comprises:
parsing the local portion into a first segment comprising a first character of the local portion and a second segment comprising any remaining characters of the local portion,
wherein one of the one or more language objects comprises the second segment.

**22.** The electronic device of claim 18, wherein said parsing the local portion into one or more language objects comprises:
parsing the local portion into a first segment comprising a first character and a second character of the local portion and a second segment comprising any remaining characters of the local portion,
wherein one of the one or more language objects comprises the second segment.

**23.** The electronic device of claim 17,
wherein the one or more other routines comprise a spell check routine; and
wherein the one or more other routines are adapted to employ one of the language objects by receiving a sequence of characters in a body of the e-mail message and in response thereto employing the spell check routine to provide an indication of presence of a discrepancy between the sequence of characters and said one of the language objects.

**24.** The electronic device of claim 17, wherein the one or more other routines are adapted to receive an entry in the recipient address field by receiving one or more individual characters entered through an input device.

**25.** The electronic device of claim 17, wherein the one or more other routines are adapted to receive an entry in the recipient address field by receiving the e-mail address from an address book.

**26.** The electronic device of claim 17, wherein the one or more other routines are adapted to receive an entry in the recipient address field by receiving the e-mail address from a web page.

**27.** The electronic device of claim 17, wherein the one or more other routines are adapted to receive an entry in the recipient address field by receiving the e-mail address from a previously received e-mail message that is being replied to.

**28.** The electronic device of claim 17,
wherein the memory comprises an address book; and
wherein the one or more other routines are adapted to receive an entry in the recipient address field by:
receiving one or more characters;
detecting that the one or more characters correspond to an existing e-mail address in the address book; and
replacing the one or more characters with the existing e-mail address.

**29.** The electronic device of claim 17, wherein the recipient address field comprises at least one of a "To:" field, a "cc:" field, or a "bcc:" field.

**30.** The electronic device of claim 17,
wherein the e-mail address further comprises characters following the ampersand symbol, the characters following the ampersand symbol comprising a domain portion; and
wherein the one or more other routines are adapted to identify one or more language objects by identifying the domain portion as one of the one or more language objects.

**31.** The electronic device of claim 17,
wherein the one or more other routines comprise a disambiguation routine; and
wherein the one or more other routines are adapted to employ one of the one or more language objects in the one or more routines by receiving an ambiguous input during generation of the e-mail message and in response thereto employing the one of the one or more language objects in the disambiguation routine to provide a suggested disambiguated result for the ambiguous input.

**32.** The electronic device of claim 17,
wherein the e-mail address further comprises characters following the ampersand character, the characters following the ampersand character comprising a domain portion; and
wherein the one or more other routines are adapted to identify one or more language objects by parsing the domain portion into one or more language objects of equal or lesser length than the domain portion.
